# EUROPEAN PATENT APPLICATION

(11) **EP 3 416 148 A1**
(43) Date of publication of application: **19.12.2018**
(21) Application number: 18176337.6
(22) Date of filing: 06.06.2018
(51) Int. Cl.: G08B 29/04

(54) **SYSTEMS AND METHODS FOR PROVIDING A NOTIFICATION OF A CYBER ATTACK IN A SECURITY SYSTEM**

(30) Priority: 13.06.2017 US 201715620984
(71) Applicant: Honeywell International Inc., Morris Plains, NJ 07950 (US)
(72) Inventor: BARAHONA, Jamie E., Morris Plains, NJ 07950 (US); ALBERT, Lee, Morris Plains, NJ 07950 (US); YUK, Howard, Morris Plains, NJ 07950 (US); ROMAN, Davis, Morris Plains, NJ 07950 (US)
(74) Representative: Houghton, Mark Phillip

(57) **Abstract**

Systems and methods for preventing and detecting a cyber security risk in a connected system and for providing a notification of the cyber security risk are provided. Some methods can include the connected system detecting the cyber security risk in the connected system, the connected system converting the cyber security risk into a change of state in the connected system, the connected system generating an alarm condition report responsive to the change of state, and the connected system transmitting an alert signal providing the notification of the cyber security risk.

## Description

### FIELD

The present invention relates generally to security systems. More particularly, the present invention relates to systems and methods for providing a notification of a cyber attack in a security system.

### BACKGROUND

Security systems with internet connectivity are popular in the consumer market because they provide the ease of self-monitoring and remote installation, for example, with configuration and firmware updates via the internet. However, such web based access poses a cyber security risk to security systems. Accordingly, security systems need protection against cyber attacks. Further, such systems, particularly when comprising loT devices, need means to enhance safety and/or security by means of selective control of such loT devices in the event of any cyber attack.

In view of the above, there is a continuing, ongoing need for systems and methods that protect security systems against cyber attacks.

### BRIEF DESCRIPTION OF THE DRAWINGS

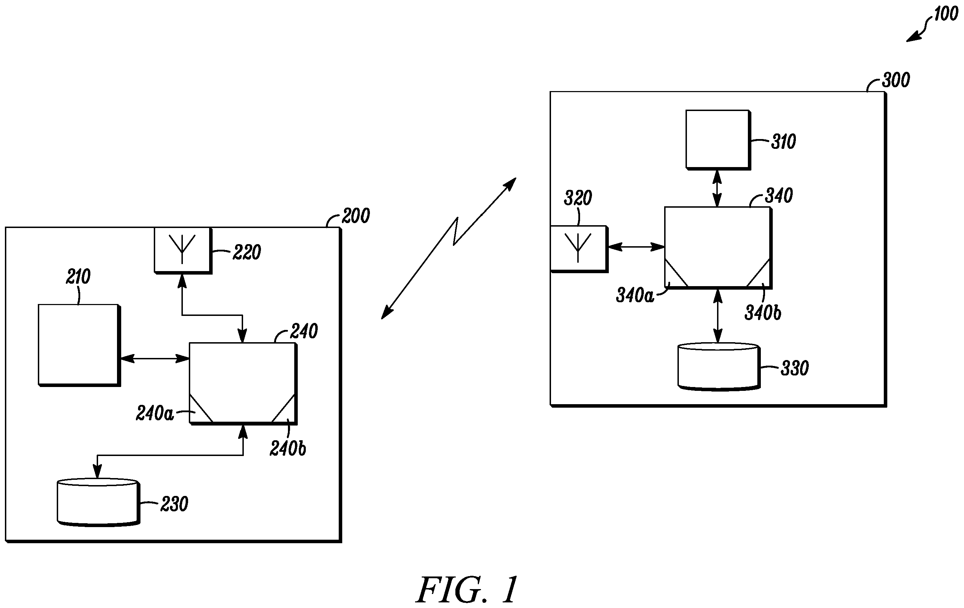

FIG. 1 is a block diagram of a system in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for preventing and detecting a cyber attack in a security system. However, embodiments disclosed herein can also include systems and methods for providing a notification of the cyber attack, such as an alert signal, so that users are aware of the cyber attack.

Systems and methods disclosed herein are described in connection with security systems. However, it is to be understood that systems and methods disclosed herein are not so limited and could be used in connection with a fire alarm system or any connected home system with internet of things (loT) devices.

In accordance with disclosed embodiments, a security system can react to all changes of state that violate or degrade the area protected by the security system. For example, when a window or a door along the perimeter of an area protected by an armed security system is opened, the armed security system can generate an alarm condition report of the same and transmit a life safety signal providing a notification of the same. Similarly, when the armed security system detects unwarranted cyber access to the armed security system, the armed security system can convert such detection into a change of state, generate an alarm condition report of the same, and transmit a life safety signal providing a notification of the same.

In some embodiments, detecting a cyber attack in or unwarranted cyber access to the security system can include, but is not limited to detecting a change or a modification to a file stored in a memory device of the security system, detecting a denial of service attack, or detecting unwarranted access to the internet connectivity of the security system. However, embodiments disclosed herein are not so limited and can include any electronic or web event that should not occur during normal operation of the armed security system.

In accordance with disclosed embodiments, when systems and methods disclosed herein detect a cyber attack in or unwarranted cyber access to the security system, systems and methods can convert such detection into a change of state of the security system related to cyber security. In some embodiments, the change of state related to cyber security can be assigned a unique identifier indicative of the cyber attack in or the unwarranted cyber access to the security system, and systems and methods disclosed herein can identify and associate a zone of the security system to the unique identifier. For example, in some embodiments, the zone associated with the unique identifier can be a non-physical zone and simply identify the change of state as being related to cyber security. Additionally or alternatively, in some embodiments, the zone associated with the unique identifier can identify the zone of the area protected by the security system from which the cyber attack or the unwarranted cyber access originated or in which a security system device that detected the cyber attack or the unwarranted cyber access is located.

In some embodiments, systems and methods disclosed herein can execute a predetermined action based on the unique identifier and the zone. For example, when systems and methods disclosed herein identify a change of state of the security system with the unique identifier indicative of the cyber attack in or the unwarranted cyber access to the security system or that the zone associated with the unique identifier identifies the change of state as being related to cyber security, systems and methods disclosed herein can transmit an alert signal to provide a notification of the cyber security issue. In some embodiments, systems and methods disclosed herein can transmit the alert signal to a predetermined user. Additionally or alternatively, in some embodiments, when the zone associated with the unique identifier identifies the zone from which the cyber attack or the unwarranted cyber access originated or in which the security system device that detected the cyber attack or the unwarranted cyber access is located, systems and methods disclosed herein can transmit the alert signal to a user, a user device, or the security system device in the zone.

In some embodiments, systems and methods disclosed herein can detect cyber access to the security system and determine whether the cyber access is a malicious cyber attack that is occurring remotely, for example, outside of the area protected by the security system, or whether the cyber access is authorized access from a remote secured server device. When systems and methods disclosed herein determine that the cyber access is authorized access, systems and methods need not take further action with respect to reporting the cyber access. However, when systems and methods determine that the cyber access is a malicious cyber attack, systems and methods disclosed herein can transmit a notification of the cyber attack as disclosed herein.

FIG. 1 is a block diagram of a system 100 in accordance with disclosed embodiments. As seen in FIG. 1, the system 100 can include a security system 200 in communication with a remote central monitoring station 300. For example, in some embodiments, the security system 200 can include a security system control panel device.

The security system 200 can detect a cyber attack in or unwarranted cyber access to the security system 200 and, upon such detection, can execute a predetermined action associated with detecting the cyber attack in or the unwarranted cyber access to the security system 200. For example, in some embodiments, the security system 200 can convert the detection of the cyber attack in or the unwarranted cyber access to the security system 200 to a change of state of the security system 200 with a unique address related to cyber security and can associate a zone of the security system 200 with the unique address. In some embodiments, the predetermined action can be based on the unique identifier or the zone and can include the security system 200 transmitting an alert signal to the remote central monitoring station 300. In some embodiments, a user can configure the predetermined action. The predetermined action is preferably an action of an loT device to mitigate potential follow-on actions of the cyber attack in the physical world, such as a break in to a region protected by the security system 200 implementing the invention or a fire in a region protected by a fire alarm system implementing the invention.

In some embodiments, responsive to receiving the alert signal from the security system 200, the remote central monitoring station 200 can transmit a dispatch signal to law enforcement or a home owner of the area protected by the security system 200. Additionally or alternatively, in the present invention, responsive to receiving the alert signal from the security system 200, the remote central monitoring station can transmit an instruction signal to execute security countermeasures (an action) to combat the cyber attack in or the unwarranted cyber access to the security system 200. As such, transmitting the alert signal providing a notification of a cyber security risk may include activating the loT device to perform the action external to computing functions to hinder the cyber attack or its effects. Very preferably, the loT device is in the region monitored by the security system 200 or the fire alarm system, which includes one or more of loT devices. The action may be to disable the functionality of the loT device, such as when the loT device includes a lighting system in the region monitored by the fire alarm system or the security system 200, so as to hinder any intruder, for example, at night, or such as when the loT device includes an HVAC system in the region monitored by the security system 200 or the fire alarm system so as to reduce air circulation and, thus, reduce the spread of any fire.. Alternatively, the action may be to enable the functionality of the loT device, such as when the loT device includes the lighting system and/or the HVAC system in the region monitored by the security system 200 or the fire alarm system.
The action may be to enable the functionality of the loT device cyclically or randomly to illuminate and darken the region using the lighting system so as to draw attention to the cyber attack and/or hinder the progress of any intruder.

As seen in FIG. 1, each of the security system 200 and the remote central monitoring station 300 can include a respective user interface device 210, 310, a respective transceiver device 220, 320, and a respective memory device 230, 330, each of which is in communication with respective control circuitry 240, 340, a respective programmable processor(s) 240a, 340a, and respective executable control software 240b, 340b as would be understood by one of ordinary skill in the art. The executable control software can be stored on a transitory or non-transitory computer readable medium, including but not limited to local computer memory, RAM, optical storage media, magnetic storage media, flash memory, and the like.

In some embodiments, one or more of the user interface devices 210, 310 can receive user input to configure the predetermined action associated with detecting the cyber attack in or the unwarranted cyber access to the security system 200 or can emit or display the alert signal. In some embodiments, the security system 200 and the remote central monitoring station 300 can communicate with each other via the transceiver devices 220, 320. In some embodiments, the memory devices 230, 330 can store information and data that can be accessed during the executing of the methods and processes described herein. In some embodiments, some or all of the control circuitry 240, 340, the programmable processor(s) 240a, 340a, and the executable control software 240b, 340b can execute and control the methods and processes disclosed herein.

In the present invention, it is to be understood that cyber security, otherwise known as computer security or IT security, relates to protecting computer systems from theft of or damage to their software, hardware, or electronic data and from misdirection or disruption of services provided those computer systems. In this regard, cyber security includes controlling physical access to system hardware, most preferably loT devices, and to protect against harm that may be done via network access, malicious data, and code injection.

In the present invention, it is to be understood that loT (Internet of Things) devices can form, include, and be part of a network of home appliances, physical devices, vehicles, and other items embedded with electronics, software, sensors, actuators, and connectivity that enables these things to connect and exchange data, thereby creating for more direct integration of the physical world into computer-based systems and resulting in reduced human intervention. Most preferably, the loT devices of the present invention are home appliances that can be controlled remotely using the internet, for example, using an Ethernet connection.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

Preferred Embodiments of the Present Invention are as numbered below:
1. A method comprising:
   a connected system detecting a cyber security risk in the connected system;
   the connected system converting the cyber security risk into a change of state in the connected system;
   responsive to the change of state, the connected system generating an alarm condition report; and
   the connected system transmitting an alert signal providing a notification of the cyber security risk.
2. The method of 1 wherein the connected system includes a plurality of loT devices, or wherein the connected system is a security system or a fire alarm system.
3. The method of 1 or 2 wherein detecting the cyber security risk in the connected system includes detecting a cyber attack in the connected system or unwarranted cyber access to the connected system.
4. The method of 2 or 3 wherein detecting the cyber attack in the connected system or the unwarranted cyber access includes detecting a change or a modification to a file stored in a memory device of the connected system, detecting a denial of service attack in the connected system, or detecting the unwarranted cyber access to internet connectivity of the connected system.
5. Any of the methods 1 to 4further comprising:
   the connected system assigning a unique identifier to the change of state, wherein the unique identifier indicates the cyber security risk in the connected system; and
   responsive to assigning the unique identifier, the connected system generating the alarm condition report.
6. The method of any of 1 to 5 further comprising:
   the connected system associating a non-physical zone of the connected system to the unique identifier, wherein the non-physical zone identifies the change of state as being related the cyber security risk; and
   responsive to associating the non-physical zone to the unique identifier, the connected system generating the alarm condition report.
7. The method of 5 further comprising:
   the connected system associating a zone of the connected system to the unique identifier, wherein the cyber security risk originated from the zone or a system device in the zone detected the cyber security risk; and
   responsive to associating the zone to the unique identifier, the connected system generating the alarm report and transmitting the alert signal to a user, a user device (such as a smart phone), or the system device in the zone.
8. The method of any of 1 to 7 further comprising the connected system transmitting the alert signal to a predetermined user or a remote central monitoring station.
9. The method of 8 further comprising, responsive to receiving the alert signal, the remote central monitoring station transmitting an instruction signal to execute countermeasures to combat the cyber security risk.
10. The method of any of 1 to 9 wherein transmitting the alert signal providing the notification of the cyber security risk includes activating an loT device to perform an action.
11. The method of claim 10 wherein the action is to disable a functionality of the loT device, and wherein the loT device includes a lighting system and/or a HVAC system in a region monitored by the connected system.
12. The method of claim 10 wherein the action is to enable a functionality of the loT device, and wherein the loT device includes a lighting system and/or a HVAC system in a region monitored by the connected system.
13. The method of claim 12 wherein the action is to enable the functionality of the loT device cyclically or randomly to illuminate and darken said the region using the lighting system so as to draw attention to a cyber threat.
14. A connected system implementing the method of any of 1 to 13 further comprising:
   the connected system determining that the cyber security risk is authorized; and
   the connected system abstaining from converting the cyber security risk into the change of state in the connected system.
15. A system comprising:
   a transceiver device;
   a programmable processor; and
   executable control software stored on a non-transitory computer readable medium,
   wherein the programmable processor and the executable control software detect a cyber security risk,
   wherein the programmable processor and the executable control software convert the cyber security risk into a change of state in the programmable processor,
   wherein, responsive to the change of state, the programmable processor and the executable control software generate an alarm condition report, and
   wherein the programmable processor and the executable control software transmit an alert signal via the transceiver device to provide a notification of the cyber security risk.
16. The system of 15 wherein the programmable processor and the executable control software are part of a connected system with a plurality of loT devices, a security system, or a fire alarm system.
17. The system of 15 or 16 wherein the programmable processor and the executable control software detecting the cyber security risk includes the programmable processor and the executable control software detecting a cyber attack in the programmable processor or the executable control software or unwarranted cyber access to the programmable processor or the executable control software.
18. The system of any of 15 to 17 wherein the programmable processor and the executable control software detecting the cyber attack or the unwarranted cyber access includes the programmable processor and the executable control software detecting a change or a modification to a file stored in an associated memory device, detecting a denial of service attack, or detecting the unwarranted cyber access to internet connectivity of the transceiver device.
19. The system of any of 11 to 18 wherein the programmable processor and the executable control software assign a unique identifier to the change of state, wherein the unique identifier indicates the cyber security risk, and wherein, responsive to assigning the unique identifier, the programmable processor and the executable control software generate the alarm condition report.
20. The system of any of 15 to 19 wherein the programmable processor and the executable control software associate a non-physical zone of the system to the unique identifier, wherein the non-physical zone identifies the change of state as being related to the cyber security risk, and wherein, responsive to associating the non-physical zone to the unique identifier, the programmable processor and the executable control software generate the alarm condition report.
21. The system of any of 15 to 20 wherein the programmable processor and the executable control software associate a zone of the system to the unique identifier, wherein the cyber security risk originated from the zone or a system device in the zone detected the cyber security risk, and wherein, responsive to associating the zone to the unique identifier, the programmable processor and the executable control software generate the alarm report and transmit the alert signal to a user, a user device, or the system device in the zone.
22. The system of any of 15 to 21 wherein the programmable processor and the executable control software transmit the alert signal via the transceiver device to a predetermined user or a remote central monitoring station.
23. The system of 22 wherein, responsive to receiving the alert signal, the remote central monitoring station transmits an instruction signal to execute countermeasures to combat the cyber security risk.
24. The system of 15 wherein the programmable processor and the executable control software determined that the cyber security risk is authorized and abstain from converting the cyber security risk into the change of state.

## Claims

1. A method comprising:
a connected system detecting a cyber security risk in the connected system;
the connected system converting the cyber security risk into a change of state in the connected system;
responsive to the change of state, the connected system generating an alarm condition report; and
the connected system transmitting an alert signal providing a notification of the cyber security risk.

2. The method of claim 1 wherein the connected system includes a plurality of loT devices, or wherein the connected system is a security system or a fire alarm system.

3. The method of claim 1 wherein detecting the cyber security risk in the connected system includes detecting a cyber attack in the connected system or unwarranted cyber access to the connected system.

4. The method of claim 3 wherein detecting the cyber attack in the connected system or the unwarranted cyber access includes detecting a change or a modification to a file stored in a memory device of the connected system, detecting a denial of service attack in the connected system, or detecting the unwarranted cyber access to internet connectivity of the connected system.

5. The method of claim 1 further comprising:
the connected system assigning a unique identifier to the change of state, wherein the unique identifier indicates the cyber security risk in the connected system; and
responsive to assigning the unique identifier, the connected system generating the alarm condition report.

6. The method of claim 5 further comprising:
the connected system associating a non-physical zone of the connected system to the unique identifier, wherein the non-physical zone identifies the change of state as being related the cyber security risk; and
responsive to associating the non-physical zone to the unique identifier, the connected system generating the alarm condition report.

7. The method of claim 5 further comprising:
the connected system associating a zone of the connected system to the unique identifier, wherein the cyber security risk originated from the zone or a system device in the zone detected the cyber security risk; and
responsive to associating the zone to the unique identifier, the connected system generating the alarm report and transmitting the alert signal to a user, a user device, or the system device in the zone.

8. The method of claim 1 further comprising the connected system transmitting the alert signal to a predetermined user or a remote central monitoring station.

9. The method of claim 8 further comprising, responsive to receiving the alert signal, the remote central monitoring station transmitting an instruction signal to execute countermeasures to combat the cyber security risk.

10. The system of claim 1 further comprising:
the connected system determining that the cyber security risk is authorized; and
the connected system abstaining from converting the cyber security risk into the change of state in the connected system.

11. A system comprising:
a transceiver device;
a programmable processor; and
executable control software stored on a non-transitory computer readable medium,
wherein the programmable processor and the executable control software detect a cyber security risk,
wherein the programmable processor and the executable control software convert the cyber security risk into a change of state in the programmable processor,
wherein, responsive to the change of state, the programmable processor and the executable control software generate an alarm condition report, and
wherein the programmable processor and the executable control software transmit an alert signal via the transceiver device to provide a notification of the cyber security risk.

12. The system of claim 11 wherein the programmable processor and the executable control software are part of a connected system with a plurality of loT devices, a security system, or a fire alarm system.

13. The system of claim 11 wherein the programmable processor and the executable control software detecting the cyber security risk includes the programmable processor and the executable control software detecting a cyber attack in the programmable processor or the executable control software or unwarranted cyber access to the programmable processor or the executable control software.

14. The system of claim 13 wherein the programmable processor and the executable control software detecting the cyber attack or the unwarranted cyber access includes the programmable processor and the executable control software detecting a change or a modification to a file stored in an associated memory device, detecting a denial of service attack, or detecting the unwarranted cyber access to internet connectivity of the transceiver device.

15. The system of claim 11 wherein the programmable processor and the executable control software assign a unique identifier to the change of state, wherein the unique identifier indicates the cyber security risk, and wherein, responsive to assigning the unique identifier, the programmable processor and the executable control software generate the alarm condition report.
